(19) Europäisches Patentamt

European Patent Office

Office européen des brevets

(11) Veröffentlichungsnummer: **0 312 828 B1**

# (12) EUROPÄISCHE PATENTSCHRIFT

(45) Veröffentlichungstag der Patentschrift: **13.05.92**

(21) Anmeldenummer: **88116408.1**

(22) Anmeldetag: **04.10.88**

(51) Int. Cl.⁵: **H04M 3/24**, H04M 3/12, H04Q 11/04

(54) Schaltungsanordnung zur routinemässigen Prüfung der Taktversorgung einer Vielzahl von mit demselben Takt betriebenen Einheiten.

(30) Priorität: **23.10.87 DE 3736000**

(43) Veröffentlichungstag der Anmeldung:
**26.04.89 Patentblatt 89/17**

(45) Bekanntmachung des Hinweises auf die
Patenterteilung:
**13.05.92 Patentblatt 92/20**

(84) Benannte Vertragsstaaten:
**AT BE CH DE FR GB IT LI NL SE**

(56) Entgegenhaltungen:
**US-A- 4 490 581**

**TELECOM REPORT, Band 4, 1981, Seiten 43-48, Beiheft "Digitalvermittlungssystem EWSD", München, DE; H. GRÜNER et al.: "Synchronisation der Vermittlungseinrichtungen in Digitalnetzen"**

(73) Patentinhaber: **SIEMENS AKTIENGESELL-SCHAFT**
**Wittelsbacherplatz 2**
**W-8000 München 2(DE)**

(72) Erfinder: **Ernst, Wolfram, Dipl.-Ing.**
**Karl-Witthalmstrasse 9**
**W-8000 München 70(DE)**

**Beschreibung**

Die Erfindung betrifft eine Schaltungsanordnung zur routinemäßigen Prüfung der Taktversorgung einer Vielzahl von mit dem selben Takt betriebenen Einheiten, vorzugsweise Einheiten eines digitalen Zeitmultiplex-Fernmeldenetzes, bei der zwei frequenzsynchron jedoch nicht phasenstarr zueinander betriebene Taktgeneratoren je nach der Schaltstellung einer Umschalteinrichtung alternativ als aktiver Taktgenerator über ein gedoppeltes Verteilsystem, an dessen beide Teile die einzelnen Einheiten wahlweise in nicht notwendig gleicher Konfiguration angeschaltet sind, den gemeinsamen Takt für die Einheiten liefern oder als mitlaufender Taktgenerator zur Übernahme der Taktversorgung im Ersatzschaltfall bereitstehen (stand-by) und wobei jede der Einheiten eine bei Ausfall ihrer individuellen Taktversorgung ansprechende Überwachungseinrichtung aufweist.

Eine solche Schaltungsanordnung ist z.B. aus TELCOM REPORT 4 (1981) Beiheft "Digitalvermittlungssystem EWSD", Seiten 43 bis 48, bekannt.

Bei einer solchen redundanten Taktversorgung kommt der routinemäßigen Prüfung besondere Bedeutung zu, damit gewährleistet ist, daß im Ersatzschaltfall der bis dahin als Stand-by-Generator fungierende Taktgenerator sowie die Zuführwege bis zu den Verteilsystemen auch tatsächlich ordnungsgemäß funktionieren. Wegen der Wichtigkeit, die einer Taktversorgung als zentrale Einrichtung beispielsweise eines Fernmeldesystems zukommt, ist darüberhinaus die Möglichkeit erwünscht, auch die Funktionsfähigkeit der Überwachungsschaltungen selbst prüfen zu können.

Wenn es nicht möglich ist, die beiden Taktgeneratoren phasenstarr zu synchronisieren, dann führt jedes Umschalten vom aktiven Taktgenerator auf den Stand-by-Taktgenerator zu Informationsstörungen, die zwar im Falle einer störungsbedingten Umschaltung hingenommen werden können, da wegen der endlichen Fehlererkennungszeit sowieso eine Taktunterbrechung unvermeidlich ist, die jedoch bei Umschaltungen im Zuge von mit relativ großer Häufigkeit vorgenommener Routineprüfungen auf jeden Fall vermieden werden sollen.

Die Aufgabe der vorliegenden Erfindung besteht daher darin, eine Schaltungsanordnung zur Prüfung einer Taktversorgung der oben genannten Art dahingehend zu verbessern, daß einerseits die vorgenannten Probleme bei der routinemäßig vorzunehmenden Umschaltung vermieden werden und andererseits über die Prüfung der Taktgeneratoren und der Zuführwege hinaus dabei eingesetzte Überwachungsschaltungen mit überwacht werden können.

Diese Aufgabe wird durch die der im Kennzeichen des Patentanspruchs angegebenen Merkmale gelöst.

Aufgrund der erfindungsgemäßen Verwendung von An/Umschaltern ist es möglich, einen Parallelweg von einem Taktgenerator zu der eigentlichen der Umschaltung von einem Taktgenerator auf den anderen dienenden Umschalteinrichtung zu schalten, so daß auch nach einer Änderung der Schaltstellung der Umschalteinrichtung die Verteilsysteme nach wie vor vom selben Taktgenerator beliefert werden, ein Phasensprung durch eine solche Umschaltung also nicht hervorgerufen wird. Durch die Anzahl von Überwachungseinrichtungen, deren Anschaltung und der Möglichkeit der gezielten Abschaltung derselben ist es darüberhinaus möglich die Funktionsfähigkeit dieser Überwachungseinrichtungen in gesonderten Prüfschritten zu überprüfen.

Nachstehend wird die Erfindung anhand eines Ausführungsbeispiels unter Bezugnahme auf eine Zeichnung näher erläutert.

In der Zeichnung zeigen:

FIG 1   ein Gesamtschaltbild der erfindungsgemäßen Schaltungsanordnung zusammen mit den zu überwachendem Taktgeneratoren, dem Taktverteilsystem und den mit dem Takt zu versorgenden Einheiten.

FIG 2 bis 8   die eigentliche Prüfschaltung in verschiedenen unterschiedliche Prüfstadien betreffende Schalterkonfigurationen.

FIG 10   Ein Impulsdiagramm eines Prüfablaufs.

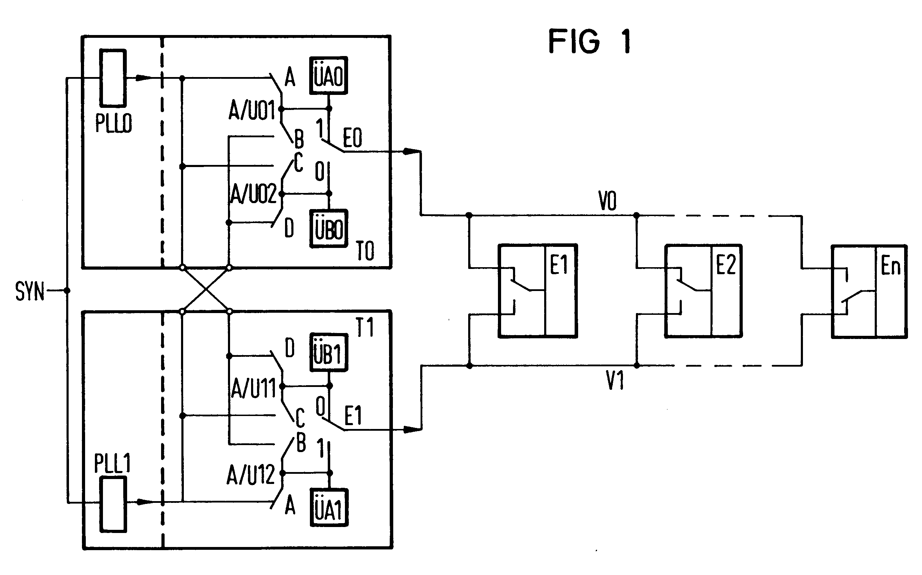

In der FIG 1 sind mit PLL0 und PLL1 zwei Taktgeneratoren angedeutet, die auf einen Mastertakt aufsynchronisiert sind, wobei jedoch der von ihnen gelieferte Takt nicht phasenstarr ist.

Diese Taktgeneratoren versorgen zwei Taktverteilsysteme V0 und V1, an die zu versorgende Einheiten E1 bis En angeschlossen sind. Wie die Darstellung zeigt, ist die Anschaltung dieser Einheiten an die Taktsysteme unterschiedlich, was davon abhängt, ob bei einzelnen dieser Einheiten wegen einer Störung des individuellen Takteingangs eine Umschaltung vom einen Taktsystem auf das andere stattgefunden hat. Die Einheiten E1 bis En weisen individuelle, hier nicht dargestellte Überwachungseinrichtungen auf, die ansprechen, wenn die individuelle Taktversorgung gestört ist, was sowohl bei diesen Einheiten liegende Ursachen haben kann als auch auf Störungen der Verteilsysteme oder der Taktbelieferung durch die Taktgeneratoren PLL0 und PLL1 zurückzuführen sein kann. Dementsprechend kann die Auswertung der von diesen Überwachungseinrichtungen gelieferten Alarmsignale unterschiedliche Konsequenzen haben, nämlich zu einem Wechsel der Anschaltung an ein anderes der beiden Verteilsysteme bei einzelnen der Einheiten führen, oder aber die Umschaltung der Taktversorgung von einem der Taktgeneratoren PLL0 und PLL1 auf den jeweils anderen nach sich ziehen.

Die Teile T0 und T1 der erfindungsgemäßen Schaltungsanordnung weisen jeweils ein Paar von weiteren Überwachungseinrichtungen ÜA0, ÜB0 und ÜB1, ÜA1 auf. Ferner sind zwei Paare von An/Umschaltern A/U01; A/U02 sowie A/U11; A/U12 vergesehen. In ihren Umschaltstellungen stellen diese An/Umschalter je nach Schaltstellung eine Verbindung zwischen dem Ausgang des einen oder des anderen Taktgenerators PLL0 und PLL1 und einem Kontakt 0,1 eines der Umschalter E einer Umschalteeinrichtung her, mit deren Hilfe entweder der eine oder der andere Taktgenerator an die beiden Verteilsysteme V0 und V1 gelegt wird. So wird beispielsweise durch den An/Umschalter A/U01 in der dargestellten Umschaltstellung der Taktgenerator PLL0 an den einen Kontakt 1 des Umschalters E0 gelegt, über den der Anschluß des Verteilsystems V0 an diesen Taktgenerator PLL0 erfolgt. In der anderen Umschaltstellung des An/Umschalters A/U01 ist bei gleicher Schaltstellung des Umschalters E0 der Taktgenerator PLL1 an das Verteilsystem V0 gelegt.

Die erwähnten Überwachungsschaltungen ÜA0, ÜB0 und ÜB1, ÜA1 sind so angeordnet, daß mit ihrer Hilfe, sofern die An/Umschalter eine ihrer Umschaltestellungen einnehmen, festgestellt werden kann, ob der eine oder der andere Taktgenerator ordnungsgemäß einen Takt bis an die Umschalteeinrichtung mit den Umschaltern E0 und E1 liefert. Wenn die An/Umschalter ihre Abschaltestellung einnehmen, ist die betreffende Überwachungseinrichtung von den Taktgeneratoren abgetrennt.

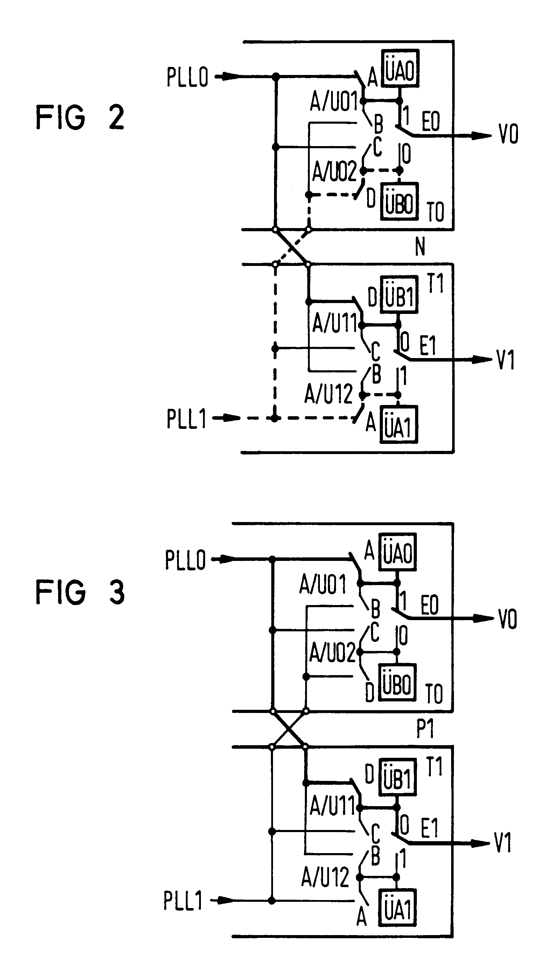

Bei der normalen Schaltungskonfiguration, wie sie FIG 1 zeigt und wie sie in FIG 2 nochmals gesondert dargestellt ist, werden die Verteilsysteme V0 und V1 vom Taktgenerator PLL0 beliefert, wobei die Überwachungseinrichtung ÜA0 einer Überwachung daraufhin dient, ob der Takt bis an den Umschalter E0 gelangt, über den das Verteilsystem V0 erreicht wird und die Überwachungseinrichtung ÜB1 daraufhin überwacht, ob der Takt an den Umschalter E1 der Umschalteeinrichtung gelangt, über den das Verteilsystem V1 erreicht wird.

In dieser Normalstellung nehmen die An/Umschalter A/U02 und A/U12 eine derartige Umschaltstellung ein, daß der vom Taktgenerator PLL1, der hier der Stand-by-Generator ist, gelieferte Takt an den Kontakt 0 des Umschalters E0 bzw. den Kontakt 1 des Umschalters E1 der Umschalteeinrichtung gelangt. Die Überwachungseinrichtung ÜB0 dient demnach dazu, die ordnungsgemäße Bereitstellung des Taktes für das Verteilsystem V0 durch den Taktgenerator PLL1 zu überprüfen, wogegen die Überwachungseinrichtung ÜB1 eine solche Bereitstellung im Hinblick auf das Verteilsystem V1 überwacht. In entsprechender Weise überwacht die Überwachungseinrichtung ÜB0 die Bereitstellung eines Taktes für das Verteilsystem V0 und die Überwachungseinrichtung ÜA1 die Bereitstellung für das Verteilsystem V1 jeweils durch den Taktgenerator PLL1.

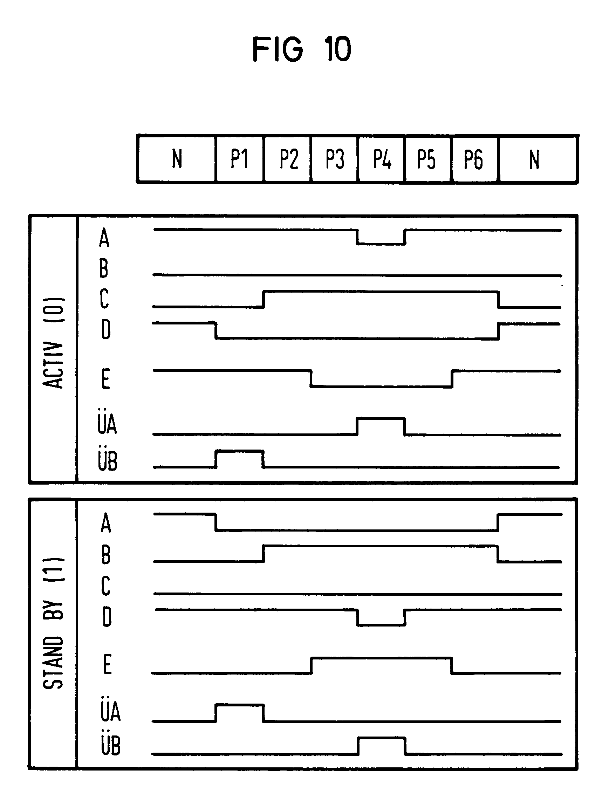

In der FIG 10 sind für die erwähnte Normalkonfiguration und für Prüfkonfigurationen P1 bis P6 Zeitdiagramme entsprechend der Schalterstellungen der Kontakte A bis D bzw. 0 und 1 der An/Umschalter A/U01 bis A/U12 bzw. der Umschalteeinrichtung E0/01 angegeben, wobei angenommen ist, daß der Taktgenerator PLL0 der augenblicklich aktive Taktgenerator und der Taktgenerator PLL1 der augenblickliche Stand-by-Generator sein sollen.

Bei der Prüfkonfiguration P1 gemäß FIG 3 haben die An/Umschalter A/U01 und A/U11 noch die in FIG 2 gezeigte Schaltstellung, die An/Umschalter A/U02 und A/U12 hingegen befinden sich in ihrer Abschaltstellung, womit die Überwachungseinrichtungen ÜB0 und ÜA1 von den Taktgeneratoren abgetrennt sind. Die beiden Überwachungseinrichtungen müssen ansprechen, sofern sie ordnungsgemäß arbeiten.

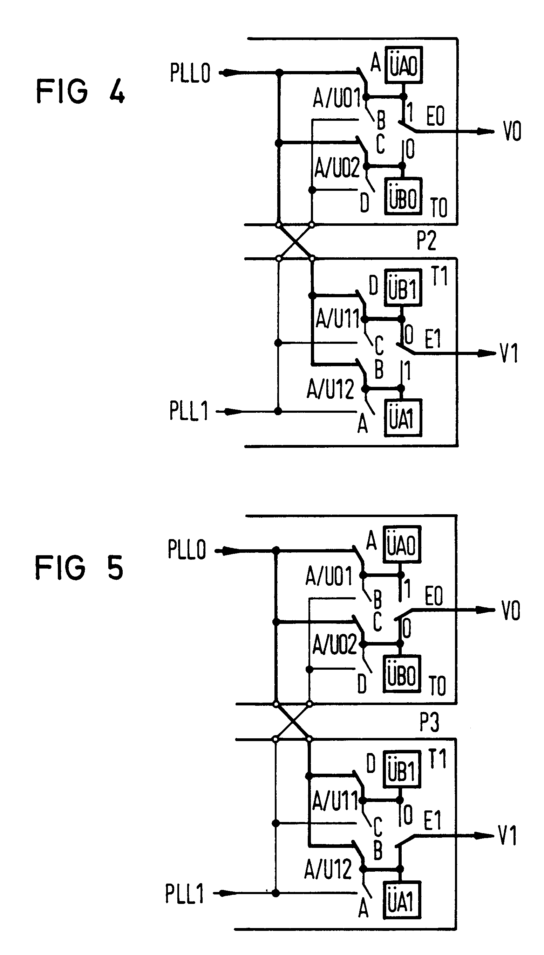

Bei der Prüfkonfiguration P2 gemäß FIG 4 ist durch entsprechende Betätigung der Kontakte C und B der An/Umschalter A/U02 und A/U12 jeweils ein Parallelweg für die Zulieferung des Taktes durch den Taktgenerator PLL0 an die Umschalter E0 und E1 der Umschalteeinrichtung eingestellt. Diese Prüfkonfiguration stellt einen Vorbereitungsschritt zur Prüffiguration P3 gemäß FIG 5 dar, die sich von derjenigen gemäß FIG 4 dadurch unterscheidet, daß nunmehr die Umschalter E0 mit E1 der Umschalteeinrichtung ihre andere Schaltstellung einnehmen. Wegen des zuvor eingestellten Parallelweges werden aber auch in dieser veränderten Schaltstellung die Verteilsysteme V0 und V1 vom Taktgenerator PLL0 aus beliefert, so daß es nicht zu den vorgenannten unerwünschten durch Phasensprünge bedingten Informationsverlusten kommen kann. Falls die Kontakte der Umschalter E0 und E1 in der neuen Schaltstellung nicht ordnungsgemäß schließen, wird, zumindest dann wenn nicht sämtliche der Einheiten E1 an ein und dasselbe Verteilsystem angeschlossen sind, die Überwachungseinrichtung eines oder mehrerer dieser Einrichtungen E1 bis En ansprechen und damit das nicht ordnungsgemäße Funktionieren eines der Umschalter E0 oder E1 signalisieren.

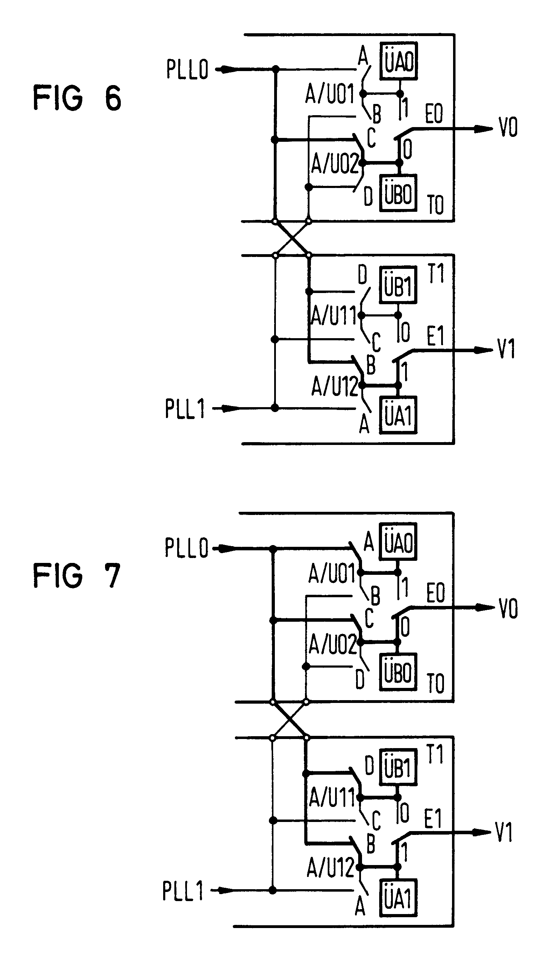

Bei der Prüfkonfiguration P4 gemäß FIG 6 nehmen die An/Umschalter A/U01 und A/U11 ihre Abschaltstellung ein, wogegen die Schaltstellung der beiden übrigen An/Umschalter gegenüber der Konfiguration in FIG 5 unverändert ist. Es sind somit die ÜberwachungseinrichtungenÜA0 und ÜB1 vom Taktgenerator PLL0 abgetrennt, so daß sie bei ordnungsgemäßem Funktionieren ansprechen müssen bzw. im Falle eines Nichtansprechens ihr fehlerhafter Betrieb signalisiert ist.

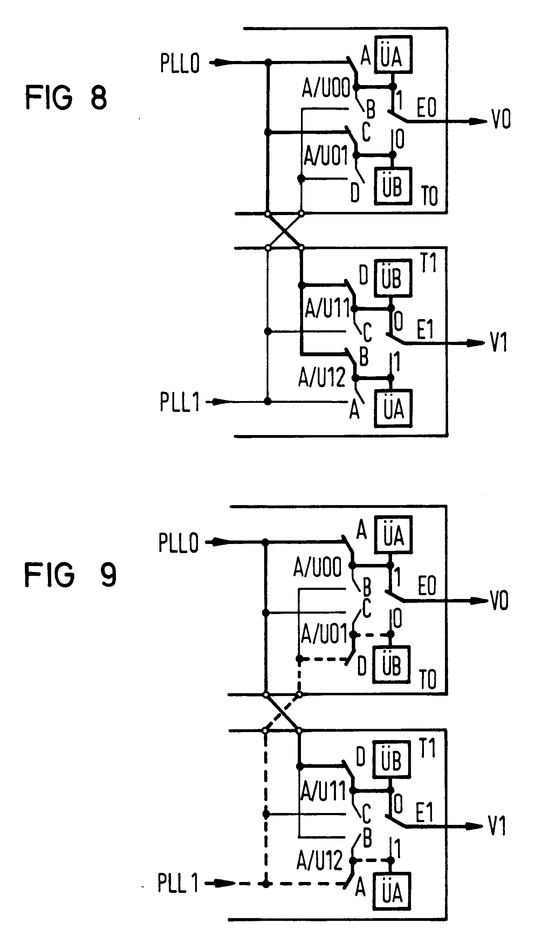

Mit der Prüfkonfiguration P5 gemäß FIG 7 wird durch Betätigung der Kontakte A und D der An/Umschalter A/U01 und A/U11 erneut ein Parallelweg für die Zuführung des Taktes an die Umschalter E0 und E1 vom Taktgenerator PLL0 aus eingestellt, womit ein Vorbereitungsschritt für das Rückschalten dieser Umschalter gemäß Schaltkonfiguration P6 in FIG 8 gegangen ist.

Wenn nach einem solchen Umschalten der Kontakt 1 des oberen Umschalters E0 bzw. der Kontakt 0 des unteren Umschalters E1 nicht ordnungsgemäß schließt, wird wiederum unter der oben erwähnten Einschränkung bei einer der Einrichtungen der E1 bis En die dortige Überwachungseinrichtung ansprechen und damit das nicht ordnungsgemäße Funktionieren dieser Umschalter signalisieren.

Die in FIG 9 dargestellte Prüfkonfiguration stimmt mit der in FIG 2 gezeigten Normkonfiguration überein.

Die Betätigung der beiden Umschalter E0 und E1 der Umschalteeinrichtung zur Herstellung der Prüfkonfiguration P3 bzw. P6 muß synchron und in einer Impulspause erfolgen, damit eine Verzerrung der Taktimpulse vermieden ist.

Wenn der Prüfablauf in einem Zustand einsetzt, in dem der Taktgenerator PLL1 der aktive und der Taktgenerator PLL0 der Stand-by-Generator ist, ergeben sich entsprechende Prüfkonfigurationen.

## Patentansprüche

1. Schaltungsanordnung zur routinemäßigen Prüfung der Taktversorgung einer Vielzahl von mit demselben Takt betriebenen Einheiten, vorzugsweise Einheiten eines digitalen Zeitmultiplex-Fernmeldenetzes, bei der zwei frequenzsynchron jedoch nicht phasenstarr zueinander betriebene Taktgeneratoren (PLL0, PLL1) je nach der Schaltstellung einer Umschalteinrichtung alternativ als aktiver Taktgenerator über ein gedoppeltes Verteilsystem (V0, V1), an dessen beide Teile die einzelnen Einheiten wahlweise in nicht notwendig gleicher Konfiguration angeschaltet sind, den gemeinsamen Takt für die Einheiten liefern oder als mitlaufender Taktgenerator (stand-by) zur Übernahme der Taktversorgung im Ersatzschaltfall bereitstehen, und wobei jede der Einheiten eine bei Ausfall ihrer individuellen Taktversorgung ansprechende Überwachungseinrichtung aufweist,

**gekennzeichnet durch**

zwei Paare von weiteren Überwachungseinrichtungen (ÜA0, ÜB0; ÜB1, ÜA1), bei denen die jeweils einen Überwachungseinrichtungen (ÜA0, ÜB1) der Überwachung des einen Taktgenerators (PLL0) und zwar im einen Fall (ÜA0) im Hinblick auf die Belieferung des einen Verteilsystems (V0) und im anderen Fall (ÜB1) im Hinblick auf die Belieferung des anderen Verteilsystems (V1) und die jeweils anderen Überwachungseinrichtungen (ÜB0, ÜA1) in entsprechender Weise der Überwachung des anderen Taktgenerators (PLL1) dienen, ferner durch zwei Paare von An/Umschaltern (A/U01, A/U02; A/U11, A/U12), die jeweils einem anderen der beiden zu den zwei Verteilsystemen (V0, V1) führenden Umschalter (E0, E1) der genannten Umschalteinrichtung generatorseitig vorgeschaltet sind, wobei jeder der An/Umschalter der Paare in der einen seiner Umschaltstellungen eine Verbindung zum einen und in ihrer anderen Umschaltstellung eine Verbindung zum anderen Taktgenerator herstellt und dabei je nach Schaltstellung des betreffenden nachgeschalteten Umschalters (E0, E1) der genannten Umschalteinrichtung bei der Taktweitergabe an ein Verteilsystem (V0, V1) beteiligt ist oder nicht und wobei jeder der An/Umschalter in seiner Abschaltstellung jeweils eine andere der paarweise vorgesehenen Überwachungseinrichtungen (ÜA0, ÜB0; ÜB1, ÜA1) von einem der Taktgeneratoren (PLL0, PLL1) abtrennt.

## Claims

1. Circuit arrangement for the routine testing of the clock supply for a multiplicity of units operated with the same clock, preferably units in a digital time-division multiplex telecommunication network, in which, depending on the switch position of a change-over device, two clock generators (PLL0, PLL1), operated synchronously with respect to frequency but not phase-locked to one another, alternatively supply the common clock for the units as active clock generator via a duplicated distribution system (V0, V1), to the two parts of which the individual units are optionally connected not necessarily in the same configuration, or are available as stand-by clock generator for taking up the clock supply in the case of switching to standby, and in which each of the units exhibits a monitoring device responding to the failure of its individual clock supply, characterised by two pairs of further monitoring devices (ÜA0, ÜB0; ÜB1, ÜA1), in which the in each case one monitoring device (ÜA0, ÜB1) are used for monitoring one clock generator (PLL0), in one case (ÜA0) with regard to the supply to one distribution system (V0) and in the other case (ÜB1) with regard to the supply to the other distribution system (V1) and the in each case other monitoring devices (ÜB0, ÜA1) are correspondingly used for monitoring the other clock generator (PLL1), furthermore by two pairs of connecting/change-over switches (A/U01, A/U02; A/U11, A/U12) which in each case precede a different one of the two change-over switches (E0, E1), leading to the two distribution systems (V0, V1), of the said change-over device on the generator side, each of the connecting/ change-over switches of the pairs establishing in one of its change-over positions a connection to one and in its other change-over position a connection to the other clock generator and during this process, depending on the switch position of the relevant subsequent change-over switch (E0, E1) of the said change-over device, being involved in the clock forwarding to a distribution system (V0, V1) or not, and each of the connecting/change-over switches, in its disconnecting position, in each case disconnecting another one of the monitoring devices (ÜA0, ÜB0; ÜB1, ÜA1), provided in pairs, from one of the clock generators (PLL0, PLL1).

**Revendications**

1. Montage pour contrôler de façon routinière l'alimentation en cadence d'une multiplicité d'unités fonctionnant avec la même cadence, de préférence des unités d'un réseau de télécommunication numérique à multiplexage temporel, dans lequel deux générateurs de cadence (PLL0, PLL1), qui fonctionnent d'une manière synchrone du point de vue des fréquences, mais sans blocage de phase entre eux, délivrent, alternativement en tant que générateur de cadence actif, et en fonction de la position d'un dispositif de commutation, la cadence commune aux différentes unités, par l'intermédiaire d'un circuit de répartition (V0,V1), aux deux parties duquel les unités sont raccordées au choix selon une configuration non nécessairement identique, ou préparent, en tant que générateur de cadence en ligne (stand-by), la cadence commune pour le transfert de l'alimentation de la cadence dans le cas d'un circuit de remplacement, et dans lequel chacune des unités possède un dispositif de contrôle qui répond dans le cas d'une défaillance de son alimentation individuelle en cadence,
caractérisé par le fait
que deux couples d'autres dispositifs de contrôle (ÜA0, ÜB0; ÜB1, ÜA1), parmi lesquels des dispositifs de contrôle (ÜA0, ÜB1) assurent le contrôle du premier générateur de cadence (PLL0), à savoir dans un cas (ÜA0) en rapport avec la desserte d'un système de distribution (V0) et dans l'autre cas (ÜB1) en rapport avec la desserte de l'autre système de répartition (V1) et les autres dispositifs respectifs de contrôle (ÜB0, ÜA1) servent de façon correspondante à contrôler l'autre générateur de cadence (PLL1), et en outre par deux couples de conjoncteurs/commutateurs (A/U01, A/U02; A/U11, A/U12), qui sont branchés, côté générateur, en amont d'un autre des deux commutateurs (E0,E1), qui établissent le raccordement aux deux systèmes de répartition (V0,V1), dudit dispositif de commutation, chacun des conjoncteurs/commutateurs des couples établissant, dans l'une de ses positions de commutation, une liaison avec un générateur de cadence et, dans son autre position de commutation, une liaison avec l'autre générateur de cadence et participant ou non à la transmission de la cadence à un système de répartition (V0,V1), en fonction de la position du commutateur considéré (E0,E1), branché en aval, dudit dispositif de commutation, tandis que, dans sa position de déconnexion, chacun des conjoncteurs/commutateurs déconnecte respectivement un autre des dispositifs de contrôle (ÜA0, ÜB0; ÜB1, ÜA1), prévus par couples, de l'un des générateurs de cadence (PLL0, PLL1).

FIG 1

FIG 2

FIG 3

## FIG 4

## FIG 5

FIG 6

FIG 7

FIG 8

FIG 9

# FIG 10

| N | P1 | P2 | P3 | P4 | P5 | P6 | N |
|---|----|----|----|----|----|----|---|

ACTIV (0): A, B, C, D, E, ÜA, ÜB

STAND BY (1): A, B, C, D, E, ÜA, ÜB